# EUROPÄISCHE PATENTSCHRIFT

(11) **EP 1 731 012 B1**
(45) Veröffentlichungstag und Bekanntmachung des Hinweises auf die Patenterteilung: **04.08.2010**
(21) Anmeldenummer: 06011722.3
(22) Anmeldetag: 07.06.2006
(51) Int. Cl.: A01B 73/06

(54) **Landmaschine mit nach vorn klappbaren Werkzeugen**
Agricultural machine with forwardly folding tools
Machine agricole à outils basculants en avant

(30) Priorität: 09.06.2005 DE 102005026812
(43) Veröffentlichungstag der Anmeldung: 13.12.2006
(73) Patentinhaber: Rabe Agri GmbH, 49152 Bad Essen (DE)
(72) Erfinder: von Allwörden, Wilhelm, Dipl.-Ing., 49152 Bad Essen (DE); Dingmann, Andreas, 49082 Osnabrück (DE)
(74) Vertreter: Tappe, Hartmut

(56) Entgegenhaltungen:
- EP-A- 1 205 098
- DE-U1- 29 815 637
- US-A1- 2001 008 185
- US-B1- 6 206 105

## Beschreibung

Die Erfindung betrifft eine Landmaschine, insbesondere für die Bodenbearbeitung und/oder für das Verteilen von Verteilgut mit großer Arbeitsbreite und nach vom klappbaren Werkzeugträgern gemäß des Oberbegriffs des Patentanspruchs 1.

Eine derartige Landmaschine ist aus DE 298 15 637 U bekannt.

Eine weitere Landmaschine mit einem nach vom klappbaren Geräterahmen wird beispielsweise in EP 1 205 098 A1 vorgeschlagen. Der beschriebene Geräterahmen weist einen Hauptrahmen mit in Betriebsverbindung stehenden, auf dem Erdboden abrollenden Rädern auf und einer nach vom erstreckenden Zugstange, sowie hinter den Rädern am Hauptrahmen quer angeordnete rechte und linke Flügelrahmen. Zum Wenden auf dem Acker heben die hydraulischen Hubzylinder den Hauptrahmen mit den Flügelrahmen hoch.

Für den Transport auf öffentlichen Straßen werden bei angehobenem Hauptrahmen die rechten und linken Flügelrahmen mittels Faltzylinder nach vom geschwenkt, so daß die Flügelrahmen für den Transport parallel zur Zugstange angeordnet sind.

Durch diese parallele Anordnung der Flügelrahmen zur Zugstange dürfen für den Transport auf öffentlichen Straßen nur kurzbauende Arbeitsgeräte an den Flügelrahmen angeordnet sein, damit die zulässige Transportbreite von 3 m nicht überschritten wird.

Der Erfindung liegt die Aufgabe zugrunde, eine verbesserte Landmaschine mit großer Arbeitsbreite und nach vom klappbaren Werkzeugträgern zu schaffen, die für den Straßentransport in kompakter Bauweise eine Transportbreite von 3 m und eine Transporthöhe von 4 m nicht überschreitet.

Diese Aufgabe wird erfindungsgemäß nach den Merkmalen des Patentanspruchs 1 gelöst, wobei die weiteren Patentansprüche in vorteilhafter Weise ergänzende Lösungen zeigen.

Die erfindungsgemäße Landmaschine weist in der Arbeitsstellung einen hinter dem Hauptrahmen und dem Fahrwerk quer zur Arbeitsrichtung klappbar angeordneten Werkzeugträger auf. An oder unter den Werkzeugträgern können Arbeitswerkzeuge verschiedener Bauart angeordnet sein, insbesondere Grubberwerkzeuge mit einer nachlaufenden Walze zur Tiefenführung der Zinken, oder Verteilaggregate, für das Verteilen von Verteilgut. Es ist auch denkbar, Ernteaggregate zum Zusammenführen oder Verteilen von Erntegut anzuordnen. Durch das wahlweise Anordnen von Stützrädern an den äußeren Werkzeugträgern ist eine Bodenanpassung der Arbeitswerkzeuge möglich.

Für den Transport auf öffentlichen Straßen mit einer Transportbreite von 3 m wird die Landmaschine über den/die hydraulischen Fahrwerkszylinder ausgehoben, dabei stützt sich die Landmaschine auf den Rädern des Fahrwerks und über die vor dem Hauptrahmen angeordnete Deichsel mit Kuppelvorrichtung ab. In ausgehobener Position werden dann die Werkzeugträger mittels Stellzylinder etwa 90° um den quer zur Arbeitsrichtung angeordneten horizontalen Drehpunkt geschwenkt, so daß die Arbeitswerkzeuge im wesentlichen quer zur Arbeitsrichtung hinter den Werkzeugträgern angeordnet sind. Zur Erhöhung der Standsicherheit und Vergrößerung der Freiräume ist es dann möglich, mit dem/den Fahrwerkszylinder/n das Fahrwerk weiter ans Ende des Hauptrahmens zu schwenken. Nachdem sich das Fahrwerk in Transportposition befindet, werden die äußeren Werkzeugträger mittels Klappzylinder synchron nach vom geklappt.

Damit die Landmaschine auf öffentlichen Straßen transportiert werden kann, sind die Arbeitswerkzeuge an den äußeren klappbaren Werkzeugträgern so angeordnet, daß sie in Transportstellung vor die Räder des Fahrwerks geklappt werden. Diese Anordnung des Fahrwerks ermöglicht, daß die Arbeitswerkzeuge in Arbeitsrichtung etwa 3,60 m Länge aufweisen dürfen. Die Bodenfreiheit der Arbeitswerkzeuge beträgt dann etwa 0,4 m bei 4 m Transporthöhe. Bei einer geringeren Bodenfreiheit könnte die Länge der Arbeitswerkzeuge in Arbeitsrichtung noch größer gewählt werden. Durch die große Länge der Arbeitswerkzeuge in Arbeitsrichtung besteht die Möglichkeit, daß mehrere Arbeitswerkzeuge hintereinander angeordnet sein können. Es besteht die Möglichkeit, einen 3-balkigen Grubber mit Einebnungswerkzeugen und einer Walze in Arbeitsrichtung hintereinander anzuordnen.

Weitere Einzelheiten der Erfindung sind den Unteransprüchen, der Beispielbeschreibung und den Zeichnungen zu entnehmen. Hierzu zeigen die nachfolgenden Zeichnungen:

**Fig. 1** eine erfindungsgemäße Landmaschine mit Bodenbearbeitungsgerät in Arbeitsstellung und in der Seitenansicht.

**Fig. 2** Landmaschine mit hochgeschwenkten Arbeitswerkzeugen in der Seitenansicht.

**Fig. 3** Landmaschine mit nach hinten geschwenktem Fahrwerk und hochgeschwenkten Arbeitswerkzeugen in der Seitenansicht.

**Fig. 4** Landmaschine in der Seitenanschicht mit Bodenbearbeitungsgerät in Transportstellung.

**Fig. 5** Landmaschine in der Draufsicht mit Bodenbearbeitungsgerät in Transportstellung.

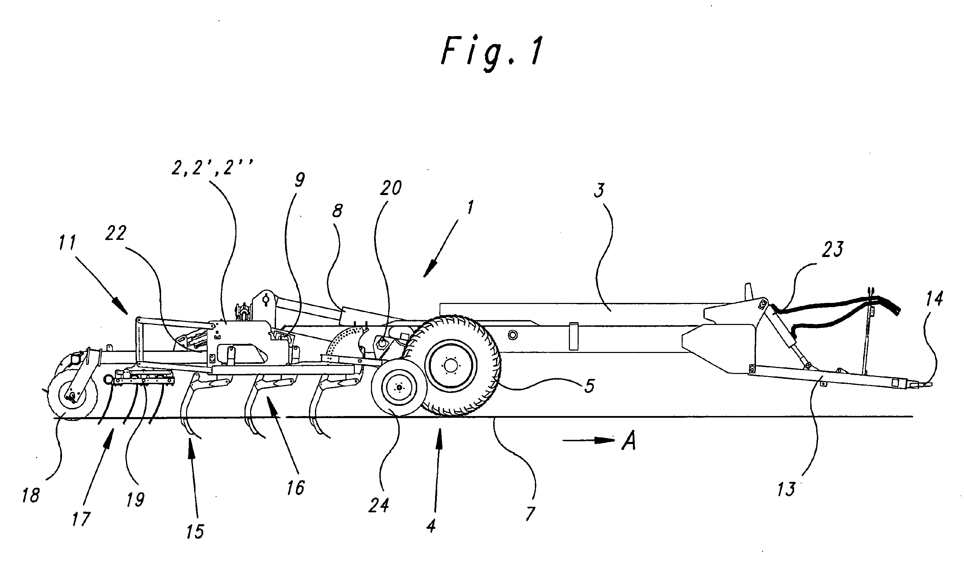

Die **Fig. 1** stellt eine Landmaschine **1** dar, mit einem Hauptrahmen **3,** einem Fahrwerk **4,** einem dreiteiligen Werkzeugträger **2,2',2"** und daran angeordnete Bodenbearbeitungsgeräte **15.** An der Vorderseite des Hauptrahmens **3** ist die Deichsel **13** dargestellt mit der Kuppelvorrichtung **14** für eine nicht dargestellte Zugmaschine. Der Deichselaushubzylinder **23,** der zwischen der Deichsel **13** und dem Hauptrahmen **3** angeordnet ist, übt während der Arbeit annähernd keine Stützfunktion aus. Am rückwärtigen Teil des Hauptrahmens **3** ist das Fahrwerk **4** mit den auf dem Boden **7** abstützenden Rädern **5** angeordnet. Während der Arbeit sind die Räder **5** vor der Fahrwerk-Schwenklagerung **20** angeordnet.

Am hinteren Ende des Hauptrahmens **3** ist der Werkzeugträger **2'** im horizontalen Drehpunkt **9** gelagert. Sowohl der horizontale Drehpunkt **9** als auch der Werkzeugträger **2'** mit den Werkzeugträgern (rechts) **2** und (links) **2"** sind quer zum Hauptrahmen **3** angeordnet. Unterhalb der Werkzeugträger **2,2',2"** sind als Arbeitswerkzeuge **11** die Bodenbearbeitungsgeräte **15** mittels einer schnell lösbaren Verbindung **22** mit den Werkzeugträgern **2,2',2"** verbunden. Die Bodenbearbeitungsgeräte **15** weisen im vorderen Teil einen 3-balkigen Grubber **16** auf, dahinter folgend sind als Einebnungswerkzeuge **17** die Striegel **19** angeordnet. Das am mittleren Werkzeugträger **2'** angeordnete Bodenbearbeitungsgerät **15** stützt sich vom auf den Rädern **5** ab und hinten auf der Walze **18.** Die an den Werkzeugträgern (rechts) **2** und (links) **2"** angeordneten Bodenbearbeitungsgeräte **15** stützen sich vorn auf den Stützrädem **24** ab und hinten auf den Walzen **18.** Während der Arbeit stellt der Stellzylinder **8** eine starre Verbindung zwischen dem Hauptrahmen **3** und dem Werkzeugträger **2'** her.

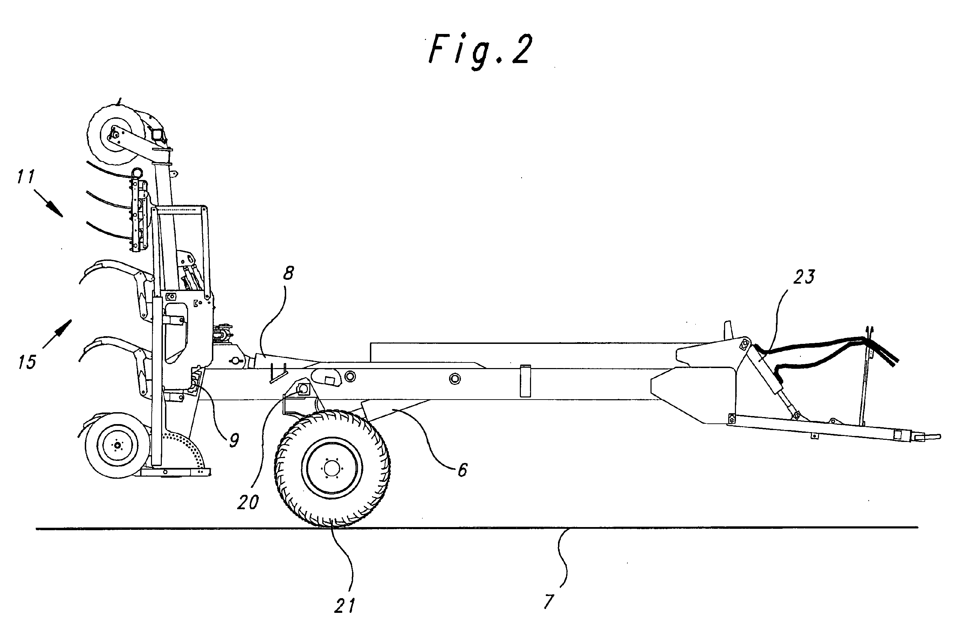

Nach dem Starrstellen des Deichselaushubzylinders **23** und dem Ausfahren des Fahrwerkszylinders **6** bis zur Aushubstellung, wie in **Fig. 2** dargestellt, wird der Stellzylinder **8** eingefahren. Dabei schwenken die Bodenbearbeitungsgeräte **15** um den horizontalen Drehpunkt **9.** Nach dem Schwenkvorgang von etwa 90° nach oben weisen die Klapplagerungen **12,12'** eine vertikale Position auf. Der Radaufstandspunkt **21** befindet sich während, sowie nach dem Schwenkvorgang der Arbeitswerkzeuge **11** vor der Fahrwerk-Schwenklagerung **20.**

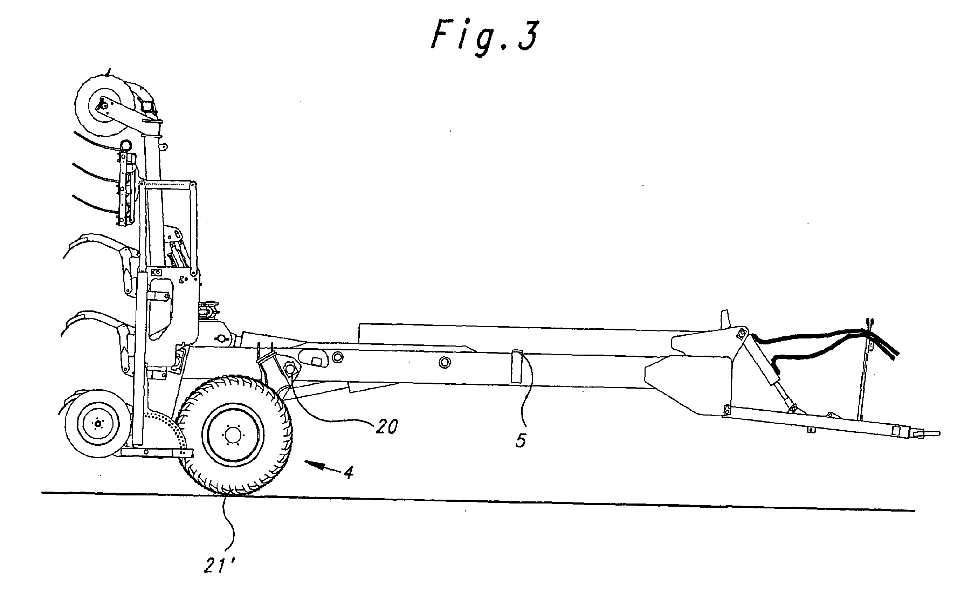

Durch das Weiterschwenken des Fahrwerks **4** mittels des Fahrwerkszylinders **6** wird der Radaufstandspunkt **21'** hinter die Fahrwerk-Schwenklagerung **20** verschoben, wie in **Fig. 3** dargestellt.

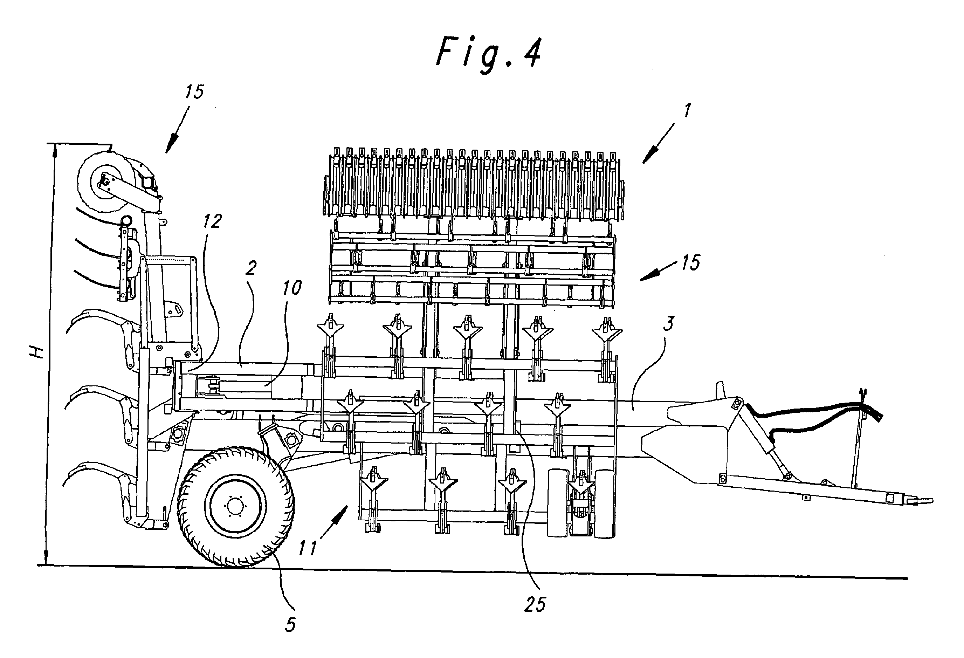

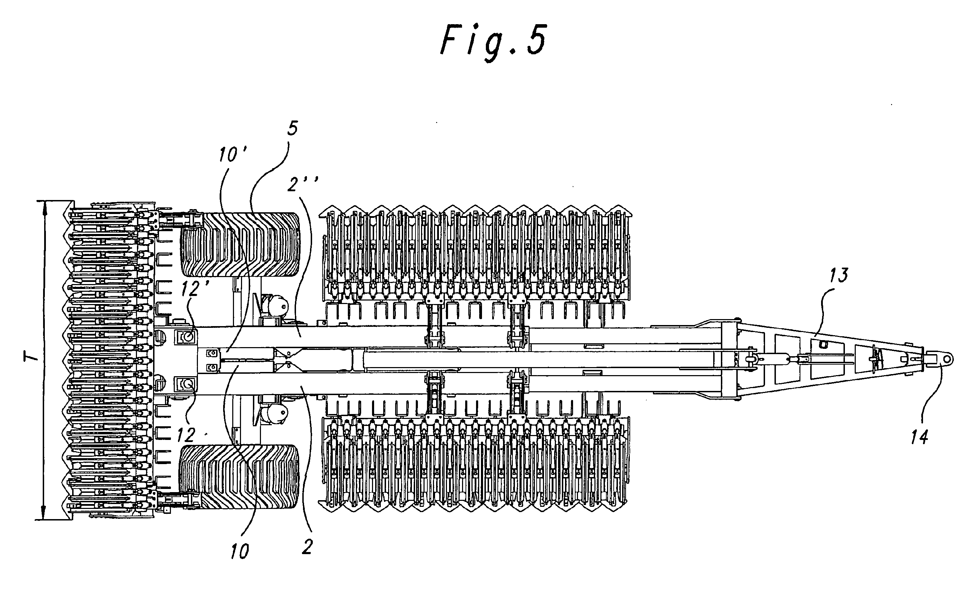

Die **Fig. 4** und **Fig. 5** stellen die Landmaschine **1** mit den Bodenbearbeitungsgeräten **15** in der Transportposition dar. Die klappbaren Werkzeugträger **2,2"** sind in den Klapplagerungen **12,12'** mittels der Klappzylinder **10** parallel zum Hauptrahmen **3** eingeklappt. Im vorderen Bereich weist der Hauptrahmen **3** für die klappbaren Werkzeugträger **2,2"** jeweils einen Auflagepunkt **25** auf. Die eingeklappten Arbeitswerkzeuge **11** sind vor den Rädern **5** angeordnet, wobei die Transportbreite **T** von maximal 3 m eingehalten wird sowie die maximale Transporthöhe **H** von 4 m.

### Bezugszeichenliste

- 1: Landmaschine
- 2: Werkzeugträger (rechts)
- 2': Werkzeugträger (Mitte)
- 2": Werkzeugträger (links)
- 3: Hauptrahmen
- 4: Fahrwerk
- 5: Rad
- 6: Fahrwerkszylinder
- 7: Boden
- 8: Stellzylinder
- 9: horizontaler Drehpunkt
- 10: Klappzylinder
- 11: Arbeitswerkzeug
- 12: Klapplagerung (rechts)
- 12': Klapplagerung (links)
- 13: Deichsel
- 14: Kuppelvorrichtung
- 15: Bodenbearbeitungsgerät
- 16: 3-balkiger Grubber
- 17: Einebnungswerkzeuge
- 18: Walze
- 19: Striegel
- 20: Fahrwerk-Schwenklagerung
- 21: Radaufstandspunkt
- 21': Radaufstandspunkt
- 22: Verbindung
- 23: Deichselaushubzylinder
- 24: Stützrad
- 25: Auflagepunkt

- A: Arbeitsrichtung
- T: Transportbreite
- H: Transporthöhe

## Patentansprüche

1. Landmaschine **(1),** insbesondere für die Bodenbearbeitung und/oder für das Verteilen von Verteilgut, mit großer Arbeitsbreite und nach vorn klappbaren Werkzeugträgern **(2,2"),** die während der Arbeit quer hinter dem vom Fahrwerk **(4)** aushebbaren Hauptrahmen **(3)** angeordnet sind, wobei die an den Werkzeugträgern **(2,2',2")** angeordneten Arbeitswerkzeuge **(11)** zum Transport auf dem Acker und auf öffentlichen Straßen durch einen oder mehrere Fahrwerkszylinder **(6)** des Fahrwerks **(4)** vom Boden **(7)** abgehoben sind, und die Werkträger **(2,2',2")** zum Transport auf öffentlichen Straßen durch einen oder mehrere Stellzylinder **(8)** um den horizontalen Drehpunkt **(9)** am hinteren Ende des Hauptrahmens **(3)** etwa 90° nach oben verschwenken können, **dadurch gekennzeichnet, daß** darauffolgend mittels Klappzylinder **(10)** die Arbeitswerkzeuge (11) der äußeren Werkzeugträger **(2,2")** um die vertikal stehenden Klapplagerungen **(12,12')** nach vorn vor die Räder **(5)** des Fahrwerks **(4)** klappbar sind und der horizontale Drehpunkt **(9)** in Arbeitsrichtung **(A)** hinter dem vorderen Ende des Arbeitswerkzeuges **(11)** angeordnet ist.

2. Landmaschine **(1)** nach Anspruch 1, **dadurch gekennzeichnet, daß** der Radaufstandspunkt **(21)** des Fahrwerks **(4)** während der Arbeit vor der Fahrwerk-Schwenklagerung **(20)** angeordnet ist.

3. Landmaschine **(1)** nach Anspruch 1, **dadurch gekennzeichnet, daß** der Radaufstandspunkt **(21')** des Fahrwerks **(4)** während des Straßentransportes hinter der Fahrwerk-Schwenklagerung **(20)** angeordnet ist.

4. Landmaschine **(1)** nach Anspruch 1, **dadurch gekennzeichnet, daß** der horizontale Drehpunkt **(9)** am Ende des Hauptrahmens **(3)** angeordnet ist.

5. Landmaschine **(1)** nach einem oder mehreren der vorgenannten Ansprüche, **dadurch gekennzeichnet, daß** die Werkzeugträger **(2,2',2")** in Arbeitsrichtung (A) hinter dem horizontalen Drehpunkt **(9)** angeordnet sind.

6. Landmaschine **(1)** nach einem oder mehreren der vorgenannten Ansprüche, **dadurch gekennzeichnet, daß** der Umstellvorgang von Arbeitsstellung in Transportstellung und umgekehrt mittels einer Folgesteuerung erfolgt.

7. Landmaschine **(1)** nach einem oder mehreren der vorgenannten Ansprüche, **dadurch gekennzeichnet, daß** die Arbeitswerkzeuge **(11)** eine schnell lösbare Verbindung **(22)** zu den Werkzeugträgern **(2,2',2")** aufweist.

## Claims

1. Agricultural machine (1), in particular for tilling soil and/or for distributing distribution material, with a large operating width and with tool carriers (2, 2") which are able to be folded forwards, which during operation are arranged transversely behind the main frame (3) which is able to be lifted out from the chassis (4), wherein the working tools (11), arranged on the tool carriers (2, 2', 2"), are lifted from the ground (7) for transportation on the field and on public roads by one or more chassis cylinders (6) of the chassis (4), and the tool carriers (2, 2', 2") for transportation on public roads can pivot upwards approximately 90° about the horizontal rotation point (9) at the rear end of the main frame (3) by one or more adjusting cylinders (8), **characterized in that** thereafter the working tools (11) of the outer tool carriers (2, 2") are able to be folded forwards by means of tilting cylinders (10) in front of the wheels (5) of the chassis (4) about the tilting bearings (12, 12'), standing vertically, and the horizontal rotation point (9) is arranged in the working direction (A) behind the front end of the working tool (11).

2. Agricultural machine (1) according to Claim 1, **characterized in that** the wheel contact point (21) of the chassis (4) is arranged in front of the chassis pivot bearing (20) during working.

3. Agricultural machine (1) according to Claim 1, **characterized in that** the wheel contact point (21') of the chassis (4) is arranged behind the chassis pivot bearing (20) during road transportation.

4. Agricultural machine (1) according to Claim 1, **characterized in that** the horizontal rotation point (9) is arranged at the end of the main frame (3).

5. Agricultural machine (1) according to one or more of the above-mentioned claims, **characterized in that** the tool carriers (2, 2', 2") are arranged in working direction (A) behind the horizontal rotation point (9).

6. Agricultural machine (1) according to one or more of the above-mentioned claims, **characterized in that** the conversion process from working position into transportation position and vice versa takes place by means of a sequence control.

7. Agricultural machine (1) according to one or more of the above-mentioned claims, **characterized in that** the working tools (11) have a quickly detachable connection (22) to the tool carriers (2, 2', 2").

## Revendications

1. Machine agricole (1), en particulier pour le travail du sol et/ou pour la répartition de matière à répartir, présentant une grande largeur de travail et des porte-outils (2, 2"), repliables vers l'avant, qui sont disposés pendant le travail transversalement derrière le cadre principal (3) pouvant être soulevé du train de roulement (4), les outils de travail (11) disposés sur les porte-outils (2, 2', 2") étant soulevés du sol (7) pour le transport sur le champ et sur des voies publiques par un ou plusieurs vérins de train de roulement (6) du train de roulement (4), et les porte-outils (2, 2', 2") pouvant basculer d'environ 90° vers le haut pour le transport sur des voies publiques par un ou plusieurs vérins de réglage (8) autour du point de rotation (9) horizontal sur l'extrémité arrière du châssis principal (3), **caractérisée en ce que** les outils de travail (11) des porte-outils (2, 2") extérieurs peuvent être repliés ensuite au moyen de vérins de repliage (10) autour des fixations repliables (12, 12') placées verticalement vers l'avant devant les roues (5) du train de roulement (4) et le point de rotation (9) horizontal est disposé dans le sens du travail (A) derrière l'extrémité avant de l'outil de travail (11).

2. Machine agricole (1) selon la revendication 1, **caractérisée en ce que** le point de contact de la roue (21) du train de roulement (4) est disposé pendant le travail devant la fixation pivotante du train de roulement (20).

3. Machine agricole (1) selon la revendication 1, **caractérisée en ce que** le point de contact de la roue (21') du train de roulement (4) est disposé pendant le transport par la roue derrière la fixation pivotante du train de roulement (20).

4. Machine agricole (1) selon la revendication 1, **caractérisée en ce que** le point de rotation (9) horizontal est disposé sur l'extrémité du châssis principal (3).

5. Machine agricole (1) selon l'une quelconque ou plusieurs des revendications précédentes, **caractérisée en ce que** les porte-outils (2, 2', 2'') sont disposés dans le sens de travail (A) derrière le point de rotation (9) horizontal.

6. Machine agricole (1) selon l'une quelconque ou plusieurs des revendications précédentes, **caractérisée en ce que** l'opération de retournement s'effectue de la position de travail dans la position de transport et inversement au moyen d'une commande séquentielle.

7. Machine agricole (1) selon l'une quelconque ou plusieurs des revendications précédentes, **caractérisée en ce que** les outils de travail (11) présentent une liaison (22) pouvant être détachée rapidement par rapport aux porte-outils (2, 2', 2'').
